(19) Europäisches Patentamt / European Patent Office / Office européen des brevets

(11) **EP 2 491 086 B1**

(12) **EUROPÄISCHE PATENTSCHRIFT**

(45) Veröffentlichungstag und Bekanntmachung des Hinweises auf die Patenterteilung:
**27.01.2016 Patentblatt 2016/04**

(21) Anmeldenummer: **10760714.5**

(22) Anmeldetag: **05.10.2010**

(51) Int Cl.:
*C09J 7/02* *(2006.01)*    *C09J 7/00* *(2006.01)*
*C09J 5/00* *(2006.01)*

(86) Internationale Anmeldenummer:
**PCT/EP2010/064845**

(87) Internationale Veröffentlichungsnummer:
**WO 2011/047958 (28.04.2011 Gazette 2011/17)**

(54) **VERFAHREN ZUR HERSTELLUNG VON VERKLEBUNGEN**

METHOD FOR PRODUCING BONDS

PROCÉDÉ POUR LA PRODUCTION DE COLLAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2009 DE 102009045812**

(43) Veröffentlichungstag der Anmeldung:
**29.08.2012 Patentblatt 2012/35**

(73) Patentinhaber: **tesa SE**
**22848 Norderstedt (DE)**

(72) Erfinder:
• **DALMIS, Gabriel**
  **22459 Hamburg (DE)**
• **DIAMANTIS, Niko**
  **25474 Bönningstedt (DE)**
• **DOLLASE, Thilo**
  **22397 Hamburg (DE)**

(56) Entgegenhaltungen:
EP-A1- 0 942 055    EP-A2- 1 820 833
WO-A1-2008/078828    DE-C1- 4 319 023

• "5.1 Kennzeichnungssysteme Auswahlhilfe für Etiketten- und Kennzeichnungsmaterial", , 1 May 2013 (2013-05-01), page 394, XP055136081, Retrieved from the Internet: URL:http://www.hellermanntyton.de/site/bin aries/content/assets/competences/de/indust rielle_kennzeichnung_oberflachenenergie_kl ebereigenschaften.pdf [retrieved on 2014-08-22]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 491 086 B1

**Beschreibung**

**Verfahren zur Herstellung von Verklebungen**

Die Erfindung betrifft Verfahren zur Herstellung von im wesentlichen defektfreien Verklebungen unter Einsatz haftklebriger Produkte mit einer ersten und einer zweiten haftklebrigen Oberfläche, wobei die erste haftklebrige Oberfläche mit einer ersten Trennschicht und die zweite haftklebrige Oberfläche mit einer zweiten Trennschicht eingedeckt ist. Diese Produkte enthalten Trennschichten, die (a) reproduzierbar in ihrem Trennkraftniveau herstellbar sind und daher nicht zu niedrig liegen, (b) eine ausreichende Trennkraftabstufung zwischen erster und zweiter Trennschicht aufweisen, so dass ein verlässliches Ablösen der ersten Trennschicht zum Zeitpunkt der Verklebung gewährleistet wird, und (c) eine ausreichend geringe Trennkraft der zweiten Trennschicht aufweisen, um ein unbeabsichtigtes auch partielles Wiederablösen der frisch verklebten ersten haftklebrigen Oberfläche vom Verklebungsuntergrund während des Vorgangs des Ablösens der zweiten Trennschicht effektiv zu verhindern, insbesondere von einem solchen mit niedriger Oberflächenenergie.

Die Beschreibung offenbart zudem die genannten haftklebrigen Produkte selbst sowie Verfahren zu ihrer Herstellung und die Verwendung solcher Produkte, z.B. beim Transfer von Haftklebeschichten auf ein Substrat, insbesondere zum Ausrüsten optisch hochwertiger Bauteile mit optisch klaren Klebeschichten.

*Stand der Technik*

Doppelseitig haftklebrige Produkte bieten aufgrund ihrer im Vergleich zu Flüssigklebern einfachen Verarbeitbarkeit, permanenten Klebrigkeit und der Tatsache, dass sie nach der Applikation nicht aushärten brauchen, einen hohen Nutzen in Anwendungsbereichen des verbindenden Klebens. Man unterscheidet unter ihnen Produkte, die ein Trägermaterial enthalten. Zu ihnen zählen doppelseitige Klebebänder und trägerfreie Produkte, wie z.B. so genannte Transferklebebänder. In beiden Produktkategorien sind die obere und die untere Oberfläche haftklebrig, also permanent klebrig. Um diese Oberflächen bis zum Anwendungszeitpunkt gegen Verschmutzung und ungewolltes vorzeitiges Verkleben zu schützen, werden die haftklebrigen Oberflächen typischerweise temporär mit wiederablösbaren Hilfsträgermaterialen eingedeckt. Handelt es sich bei den doppelseitig haftklebrigen Produkten um Blattware, dann wird zur Eindeckung der Unterseite ein Blatt eines Hilfsträgermaterials verwendet und für die Oberseite ein zweites. Werden die doppelseitig haftklebrigen Produkte in Rollenform konfektioniert, dann können ebenfalls zwei Hilfsträgermaterlialien zum Einsatz kommen oder auch eine einzige Bahn, die vorder- und rückseitig so vorbereitet ist, dass sie sich zum Zeitpunkt der Anwendung vom haftklebrigen Produkt zunächst von einer haftklebrigen Oberfläche und danach von der zweiten wieder ablösen lassen.

Als Hilfsträgermaterialien kommen üblicherweise Papiere oder Folien zur Anwendung, die ein- oder beidseitig so vorbereitet sind, dass sich eine haftklebrige Schicht von der Kontaktfläche reversibel trennen lässt. Man spricht entsprechend von Trennpapieren oder -folien, allgemein auch von Trennlinern. Zur Ausstattung ihrer Oberfläche(n) mit trennender Funktion werden die Trägerpapiere oder -folien insbesondere mit einem Trennlack beschichtet.

Trennlacke basieren auf Formulierungen mit geringer Oberflächenenergie. Eine wichtige Formulierungsklasse sind silikonbasierende Systeme [D. Satas in "Handbook of Pressure Sensitive Adhesives Technology", D. Satas (ed.), 3. Aufl., 1999, Satas & Associates, Warwick, S. 632 - 651]. Um ein anwendungsspezifisch verlässliches Wiederablösen des Trennliners zu gewährleisten, ist es erforderlich, die Trenneigenschaften auf die adhäsiven Eigenschaften des haftklebrigen Produkts abzustimmen. Als eine zentrale Größe, die das Ablöseverhalten beschreibt, dient die Trennkraft. Häufig wird auch die Abzugskraft zur Beschreibung des Ablöseverhaltens gewählt.

Es ist üblich, Trennliner nach ihrer Trennkraft zu kategorisieren. Satas kategorisiert Trennsysteme nach "super low release" bei Trennwerten zwischen 4 und 8 g/25 mm (entsprechend ca. 1,5 cN/cm bzw. 3 cN/cm), "low release" bei Trennwerten von 8 bis 25 g/25 mm (ca. 3 cN/cm bzw. 10 cN/cm), "normal release" bei Trennwerten von 25 bis 50 g/25 mm (ca. 10 cN/cm bzw. 20 cN/cm), "moderate release" bei Trennwerten von 50 bis 150 g/25 mm (ca. 20 cN/cm bzw. 60 cN/cm), "moderately tight release" bei Trennwerten von 150 bis 250 g/25 mm (ca. 60 cN/cm bzw. 100 cN/cm), "tight release" bei Trennwerten von 250 bis 500 g/25 mm (ca. 100 cN/cm bzw. 200 cN/cm) und "very tight release" bei Trennwerten von 500 bis 2000 g/25 mm (ca. 200 cN/cm bzw. 800 cN/cm).

US 4,728,571 kategorisiert Trennkraftbereiche für stark klebende Haftkleber nach "low" (50 bis 150 cN/cm), "intermediate" (250 bis 500 cN/cm) und "high" (600 bis > 1000 cN/cm).

Kinning unterscheidet ein "premium" Trennsystem mit Trennkräften zwischen 1 und 10 g/cm (entsprechend ca. 1 cN/cm bzw. 10 cN/cm), ein "modified" Trennsystem mit Trennkräften zwischen 10 und 50 g/cm (ca. 10 cN/cm bzw. 50 cN/cm) und ein "tight" Trennsystem mit Trennkräften zwischen 50 und 500 g/cm (ca. 50 cN/cm bzw. 500 cN/cm) [D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535].

Ausgehärtete Trennlacke auf Silikonbasis bieten sehr niedrige Trennkräfte ("premium"). In vielen Anwendungen werden jedoch höhere Trennkräfte verlangt. Den "premium" Systemen können dazu sog. Controlled release agents (CRA) zugegeben werden. EP 108 208 schlägt bestimmte CRAs vor. "Tight" Systeme werden beispielsweise in US 2008/176,086 vorgeschlagen.

In gängigen Verfahren zur Herstellung von doppelseitigen Selbstklebeprodukten, insbesondere zur Herstellung von Transferklebebändern, wird die Haftklebemasserezeptur auf eine erste Trennlinerbahn (Trennliner A) beschichtet und anschließend entweder erst mit einer zweiten Trennlinerbahn (Trennliner B) eingedeckt und dann gehärtet [US 4,181,752] oder erst getrocknet/gehärtet und dann mit einer zweiten Trennlinerbahn eingedeckt [US 5,281,455; DE 431 90 23], bevor der Verbund aufgewickelt wird. Die auf dem Trennliner beschichtete Klebemasse kann allerdings auch ohne Zukaschieren eines weiteren Materials aufgewickelt werden. In diesem Fall kann dann auch die Rückseite des Trennliners mit einem Trennsystem ausgerüstet sein.

Um eine praktikable Verarbeitbarkeit der doppelseitig haftklebrigen Produkte in der Klebanwendung sicherzustellen, ist es erforderlich, dass sich in einem ersten Verarbeitungsschritt eine üblicherweise vordefinierte haftklebrige Oberfläche des Produkts verlässlich von der sie schützenden Trennschicht ablösen lässt, ohne dass sich das doppelseitig haftklebrige Produkt währenddessen bereits von der die zweite haftklebrige Oberfläche schützenden Trennschicht löst. Für stabile Verarbeitbarkeit ist gewünscht, dass ein solches Ablösen vom falschen Trennliner zu diesem Prozesszeitpunkt auch partiell nicht erfolgt.

In Anwendungen, bei denen es auf besonders hohe optische Qualität der Verklebung ankommt, kann bereits partielles Umspulen zu irreversiblen Defekten in der Klebmasse führen, so dass eine optisch einwandfreie Verklebung dann nicht mehr möglich ist.

Nachdem die erste haftklebrige Oberfläche von der ersten Trennschicht befreit wurde, wird das doppelseitig haftklebrige Produkt typischerweise mit dem Zielsubstrat, oftmals einem von zwei zu verklebenden Objekten, versehen. Daran schließt sich der Verfahrensschritt an, in dem die zweite haftklebrige Oberfläche des doppelseitig haftklebrigen Produkts offengelegt wird, so dass dann der Kontakt mit dem zweiten Zielsubstrat hergestellt werden kann. Die Verarbeitungsfähigkeit der doppelseitig haftklebrigen Produkte in solchen Prozessen hängt stark von den Trenneigenschaften der Trennschichten und dem Wechselspiel mit den adhäsiven Eigenschaften der haftklebrigen Schichten ab.

Um diese Anforderung an die doppelseitig haftklebrigen Produkte zu erfüllen, weisen die Trennschichten der Vorder-/Rückseite des doppelseitigen Trennliners bzw. von Trennliner A und Trennliner B zu diesem Zweck üblicherweise deutlich unterschiedliche Trennkräfte auf. Um ein gutes Abrollen bzw. Ausdecken der ersten Trennlinerseite bzw. des ersten Trennliners zu gewährleisten, sind Selbstklebeprodukte erhältlich, die Trennkraftabstufungen von 1:4 oder sogar 1:7 aufweisen. Trennlinerkombinationen eines "premium" Systems mit einem "modified" oder sogar "tight" System, entsprechend der Klassifizierung nach Kinning, sind für den Fachmann nicht unüblich.

Darüber hinaus offenbart US 5,281,455 beispielhafte Produktaufbauten, die aus einer silikonbasierenden Klebschicht bestehen, deren beide Seiten mit Trennlinern der gleichen Art eingedeckt sind. Genannt wird die Anforderung, dass, obwohl auf beiden Seiten das gleiche Linersystem verwendet wird, ein differentielles Ablöseverhalten gegeben sein muss, um sicheres Ablösen zunächst eines Trennliners zu gewährleisten. Herstellung von Transferklebebändern erfolgt in diesem Beispiel durch Beschichtung eines ersten Liners mit Klebemasse und Eindeckung mit einem zweiten Liner, nachdem die Klebemasse getrocknet wurde. Es wird jedoch nicht offenbart, auf welche Weise technisch geleistet werden kann, dass sich die Trennkräfte der beiden identischen Liner ausreichend deutlich und mit welcher Trennkraftdifferenz unterschieden.

Weitere konkrete Lösungsvorschläge für die genannte technische Anforderung gibt DE 43 19 023 an. Ein acrylatbasierendes Transferklebeband wird demnach auf beiden Seiten mit einer Trennfolie eingedeckt, wobei die Trennfolien auf extrem niedrigem Trennkraftniveau unterschiedlich silikonisiert wurden. Eine Trennschicht weist eine Trennkraft zwischen 30 und 80 mN/cm, insbesondere zwischen 35 und 55 mN/cm, auf, die zweite eine Trennkraft zwischen 5 und 30 mN/cm, insbesondere zwischen 12 und 25 mN/cm. Aus dieser Schrift wird ersichtlich, dass vorteilhafte Ausgestaltungen offenbar dann erreicht werden, wenn die Silikontrennschichten so eingestellt sind, dass sie sich um mindestens 5 mN/cm, eher mindestens 10 mN/cm unterscheiden. Die Schrift geht nicht auf die Notwendigkeit ein, das Ablöseverhalten der Trennliner und die Verklebungsfestigkeit auf dem Substrat auszutarieren.

Doppelseitig haftklebrige Produkte kommen bei der Verklebung unterschiedlichster Materialien zum Einsatz. Gläser, Metalle und Kunststoffe seien als Beispiele genannt. In einer Reihe von Verklebungsaufgaben besteht die Notwendigkeit, eine ausreichende Verklebungsfestigkeit auf Materialien mit Oberflächen niedriger Oberflächenenergie (engl. LSE, low surface energy) zu erreichen. Untergründe, die als niederenergetisch gelten, weisen häufig eine Oberflächenenergie von weniger als etwa 40 mN/m oder sogar von weniger als 35 mN/m und 30 mN/m auf. Zu solchen Materialen zählen unter anderem einige UV-Lacke und Pulverbeschichtungen sowie Polyolefine wie Polypropylen (PP), Hochdruck-Polyethylen (LDPE), Niederdruck-Polyethylen (HDPE), ultrahochmolekulares Polyethylen (UHMWPE) und Polymere aus Ethylen-Propylen-Dien-Monomer (EPDM). Als besonders kritisch gelten Materialien, die neben einer geringen Oberflächenenergie zusätzlich rauhe Oberflächen und darüber hinaus geringe Härten, beispielsweise Shore-A-Härten von weniger als 50, häufig sogar von weniger als 40, besitzen. Beispiele für diese Materialien sind offenzellige Schäume aus Polyethylen, EPDM, Polyester oder Polyurethan. Lacke und Farben können niedrige Oberflächenenergien auf Grund unpolarer Bindemittelkomponenten und/oder oberflächenaktiver Funktionsadditive wie Verlaufsmitteln, Gleitmitteln oder Entlüftern aufweisen.

Zudem existieren Verklebungsanwendungen, in denen es auf hohe Reinheit und/oder optische Qualität aller Komponenten und damit auch des haftklebrigen Produkts ankommt. In solchen Bereichen bieten sich insbesondere doppelseitig haftklebrige Produkte an, die reinacrylatbasierende Klebschichten enthalten, oder solche, die auf Silikonen basieren. Klebemassen, die sich durch höchste Reinheit auszeichnen und daher für diese Anwendungen ohne Alternative sind, weisen jedoch zum Teil, wenn auch immer noch für die Anwendung ausreichende, so doch geringere Verklebungsfestigkeiten auf, als es von anderen Klebmassesystemen bekannt ist (in diesem Zusammenhang seien harzformulierte Rezepturen genannt, deren Reinheit und optische Qualität meistens an diejenige von insbesondere reinacrylatbasierenden Klebemassen nicht heranreichen kann, typische Klebkräfte aber höher liegen).

Neben Trennkräften (bestimmt durch die Ablösekraft von Testklebebändern) ist die Abzugskraft (abgekürzt als "AZK", bestimmt durch die Ablösekraft von einer produktspezifischen Klebemasse) zur Charakterisierung von Trennsystemen von großer Bedeutung.

Die Einsetzbarkeit eines doppelseitig haftklebrigen Produkts zeigt sich daher also nicht allein durch eine verlässliche Ablösbarkeit des haftklebrigen Produkts von einem ersten Trennliner bzw. von der einen Seite eines doppelseitigen Trennliners, wofür eine bestimmte Abzugskraft, AZK1, aufgebracht werden muss. Vielmehr ist auch darauf zu achten, dass die Abzugskraftkraft zum Ablösen des zweiten Trennliners bzw. der zweiten Seite eines doppelseitigen Trennliners, AZK2, gering genug ist, so dass die Klebkraft der bereits mit dem ersten Verklebungsuntergrund in Kontakt gebrachten Haftklebeschicht im frisch verklebten Zustand, KK(frisch), sie in solchem Maße übertrifft, dass ein unbeabsichtigtes voll- oder teilflächiges Ablösen der Haftklebeschicht vom Verklebungsuntergrund sichergestellt ist. Qualitativ muss also

$$AZK1 < AZK2 < KK(frisch)$$

gelten. Der zugängliche Wertebereich für AZK1 und AZK2 wird aus drei Gründen eingeschränkt.

Zum einen kann die Abzugskraft AZK1 durch die über die Anwendung vorgegebene Verklebungsfestigkeit im Frischzustand KK(frisch) nicht beliebig hoch ausgewählt werden. KK(frisch) begrenzt vielmehr die zugänglichen Werte von AZK2 nach oben hin. Dies wirkt sich insbesondere dann aus, wenn eine Verklebung auf Oberflächen niedriger Oberflächenenergie vorgenommen werden soll.

Je niedriger AZK2 eingestellt werden kann, desto unabhängiger wird man von KK(frisch) und folglich umso universeller wird das doppelseitig haftklebrige Produkt verwendbar.

Zum anderen sind minimale Abzugskräfte erforderlich, da niedrigste Werte häufig nicht prozessstabil realisiert werden können. Dies begrenzt den zugänglichen Wertebereich für AZK1 nach unten hin.

Schließlich gilt, wie über die Darstellung des Stands der Technik bereits ausgeführt wurde, dass eine ausreichende Abstufung in den Abzugskräften AZK1 und AZK2 vorhanden sein muss, damit ein verlässliches Ablösen der ersten Trennschicht gewährleistet werden kann.

Ist die Differenz aus KK(frisch) und minimal möglicher AZK1 gering, dann resultiert die Anforderung, dass die Abzugskraftabstufung AZK1 : AZK2 ebenfalls gering ist.

Es besteht damit die Aufgabe, ein doppelseitig haftklebriges Produkt zur Verfügung zu stellen, das (a) eine ausreichend geringe Abzugskraft der zweiten Trennschicht aufweist, um ein unbeabsichtigtes auch partielles Wiederablösen der frisch verklebten ersten Haftklebemasse vom Verklebungsuntergrund während des Vorgangs des Ablösens der zweiten Trennschicht effektiv zu verhindern, so dass insbesondere eine Verklebung in optisch hochwertiger Qualität vor allem auf Oberflächen niedriger Oberflächenenergie möglich wird, (b) Trennschichten enthält, die reproduzierbar in ihrem Abzugskraftniveau herstellbar sind und daher nicht zu niedrig liegen und (c) eine möglichst geringe aber immer noch ausreichende Abzugskraftabstufung zwischen erster und zweiter Trennschicht aufweist, so dass ein verlässliches Ablösen der ersten Trennschicht zum Zeitpunkt der Verklebung gewährleistet wird.

Die vorliegende Erfindung schlägt einen Lösungsansatz für dieses bislang ungelöste technische Problem in Form eines neuen Verfahrens vor.

*Erfindung*

Die vorliegende Erfindung betrifft ein Verfahren zur Herstellung einer Verklebung zweier Substrate, von denen zumindest eines transparent ist und von denen zumindest eines eine Oberfläche mit einer Oberflächenenergie (gemessen nach Testmethode C) von höchstens 40 mN/m, bevorzugt höchstens 35mN/m, besonders bevorzugt höchstens 30 mN/m aufweist. Hierbei kann es sich bei dem transparenten Substrat um das Substrat mit einer Oberfläche mit einer Oberflächenenergie (gemessen nach Testmethode C) von höchstens 40 mN/m, bevorzugt höchstens 35mN/m, besonders bevorzugt höchstens 30 mN/m handeln.

Das erfindungsgemäße Verfahren umfasst die Verwendung eines doppelseitig haftklebrigen Produktes mit einer ersten und einer zweiten haftklebrigen Oberfläche, wobei die erste haftklebrige Oberfläche mit einer ersten Trennschicht eingedeckt ist und die zweite haftklebrige Oberfläche mit einer zweiten Trennschicht eingedeckt ist. Die Abzugskraft der ersten Trennschicht von der ersten haftklebrigen Oberfläche, AZK1, ist dabei geringer ist als die Abzugskraft der zweiten Trennschicht von der zweiten haftklebrigen Oberfläche, AZK2, und das Verhältnis der Klebkraft der Frischverklebung der ersten haftklebrigen Oberfläche auf einer Oberfläche mit einer Oberflächenenergie (gemessen nach Testmethode C) von höchstens 40 mN/m (KKfrisch, gemessen nach Testmethode B), bevorzugt von höchstens 35 mN/m, sehr bevorzugt von höchstens 30 mN/m zu der Abzugskraft (gemessen nach Testmethode A) der zweiten Trennschicht von der zweiten haftklebrigen Oberfläche, KKfrisch: AZK2, beträgt mindestens 13,5, bevorzugt 15,0, besonders bevorzugt 20,0. Das erfindungsgemäße Verfahren umfasst hierbei den folgenden Schritt:

(a) das Lösen der ersten Trennschicht von der ersten haftklebrigen Oberfläche sowie das Inkontaktbringen der ersten haftklebrigen Oberfläche mit der Oberfläche mit einer Oberflächenenergie (gemessen nach Testmethode C) von höchstens 40 mN/m, bevorzugt höchstens 35mN/m, besonders bevorzugt höchstens 30 mN/m.

Im Sinne der Erfindung umfasst das oben genannte Verfahren zusätzlich zu Schritt (a) den nachfolgenden Schritt (b):

(b) das Lösen der zweiten Trennschicht von der zweiten haftklebrigen

Oberfläche und das Inkontaktbringen der zweiten haftklebrigen Oberfläche mit der Oberfläche des zweiten der zwei zu verklebenden Substrate, so dass die Klebkraft der zweiten haftklebrigen Oberfläche auf der Oberfläche des zweiten der zwei zu verklebenden Substrate weniger als 35 cN/cm beträgt (gemessen nach Testmethode B).

Beschrieben werden ferner die nach dem erfindungsgemäßen Verfahren erhältlichen Produkte sowie die in diesen Verfahren verwendeten Produkte. Des Weiteren betrifft die Beschreibung ein Verfahren zur Herstellung der letztgenannten Produkte. Ein weiterer Aspekt der vorliegenden Beschreibung betrifft die Verwendung dieser Produkte zur Verklebung zweier transparenter Substrate.

Das erfindungsgemäße Verfahren umfasst die Verwendung eines Transferklebebandes als doppelseitig haftklebriges Produkt. In einer weiteren Ausführungsform handelt es sich bei dem doppelseitig haftklebrigen Produkt um ein solches, das zu einer archimedischen Spirale aufgewickelt ist.

Beschreibungsgemäß umfasst das doppelseitig haftklebrige Produkt eine Haftklebemasseschicht mit einer ersten und einer zweiten haftklebrigen Oberfläche. Bei dem doppelseitig haftklebrigen Produkt handelt es sich um eine Haftklebemasseschicht, die auf ihren haftklebrigen Oberflächen mit jeweils einem Trennliner eingedeckt ist.

In einer besonderen Ausführungsart betrifft die vorliegende Erfindung ein Verfahren, worin beide Substrate transparent sind.

Die Erfindung betrifft ein Verfahren zur Herstellung der erfindungsgemäß verwendeten haftklebrigen Produkte, umfassend die folgenden Schritte:

(i) das Bereitstellen einer ersten Trennschicht;
(ii) das Bereitstellen einer Haftklebemasseschicht auf der ersten Trennschicht; sowie
(iii) das Eindecken der Haftklebemassenschicht mit einer zweiten Trennschicht.

Bei den erfindungsgemäß verwendeten Produkten handelt es sich wie beschrieben um doppelseitig haftklebrige Produkte mit einer ersten und einer zweiten haftklebrigen Oberfläche, wobei die erste haftklebrige Oberfläche mit einer ersten Trennschicht eingedeckt ist und die zweite haftklebrige Oberfläche mit einer zweiten Trennschicht eingedeckt ist, wobei

- die erste Trennschicht in der Verwendung des Produkts zunächst von der ersten haftklebrigen Oberfläche ausgedeckt wird
- und das Verhältnis der Klebkraft der Frischverklebung der ersten haftklebrigen Oberfläche auf einer Oberfläche mit einer Oberflächenenergie (gemessen nach Testmethode C) von höchstens 40 mN/m (KKfrisch, gemessen nach Testmethode B) zu der Abzugskraft (gemessen nach Testmethode A) der zweiten Trennschicht von der zweiten haftklebrigen Oberfläche, KKfrisch: AZK2, mindestens 13,5 beträgt. Die zweite Trennschicht ist also auf die Klebmasse abgestimmt.

I n einer bevorzugten Ausführungsform beträgt das Verhältnis der Klebkraft der Frischverklebung der ersten haftklebrigen Oberfläche auf einem Verklebungsuntergrund (gemessen nach Testmethode B) zu der Abzugskraft (gemessen nach Testmethode A) der zweiten Trennschicht von der zweiten haftklebrigen Oberfläche, KK(frisch) : AZK2, mindestens 15,0. In einer besonders bevorzugten Ausführungsform beträgt dieses Verhältnis mindestens 20,0.

Das erfindungsgemäße Verfahren ist dabei auf die Verklebung zweier Substratoberflächen gerichtet, wobei zumindest eines dieser Substrate transparent ist. Wenigstens eine der zu verklebenden Substratoberflächen weist eine Oberflächenenergie (gemessen nach Testmethode C) von höchstens 40 mN/m auf. In einer bevorzugten Ausführungsform handelt es sich um eine zu verklebende Oberfläche mit einer Oberflächenenergie von höchstens 35 mN/m, sehr bevorzugt von höchstens 30 mN/m.

Überraschender Weise wurde gefunden, dass das erfindungsgemäße Verfahren eine Verklebung in besonders hoher optischer Qualität ermöglicht.

Die Abzugskraft AZK1 beträgt bevorzugt mindestens 2 cN/cm, sehr bevorzugt 3,5 cN/cm. Das Verhältnis der Abzugskräfte AZK1 : AZK2 beträgt vorzugsweise 1 : 1,5 bis 1 : 4, oder auch mehr oder weniger. Ein geringer Unterschied in den Abzugskräften wie z.B. 1 : 1,5 wird vorteilhaft gewählt, um eine ausreichende Abstufung im Trennverhalten zwischen Trennschicht 1 und Trennschicht 2 vom doppelseitig haftklebrigen Produkt zu gewährleisten. Ein Verhältnis von höchstens 1 : 4 dagegen ist vorteilhaft, um die Abzugskräfte der Trennschichten, insbesondere der zweiten Trennschicht so niedrig wie möglich einzustellen, um ein möglichst großes Verhältnis zur Frischklebkraft auf dem Zieluntergrund zu erreichen.

Im Sinne der Erfindung beträgt die Klebkraft der zweiten haftklebrigen Schicht auf dem Zielsubstrat weniger als 35 cN/cm, bevorzugt weniger als 20 cN/cm und besonders bevorzugt weniger als 10 cN/cm.

Als Haftklebemassen in erfindungsgemäßen doppelseitig haftklebrigen Produkten können alle linearen, sternförmigen, verzweigten, gepfropften oder andersartig gestalteten Polymere, bevorzugt Homopolymere, statistische Copolymere oder Blockcopolymere, zum Einsatz kommen, die eine Molmasse von mindestens 100 000 g/mol, bevorzugt von mindestens 250 000 g/mol, sehr bevorzugt von mindestens 500 000 g/mol aufweisen. Bevorzugt wird eine Polydispersität, gegeben als Quotient aus Massenmittel und Zahlenmittel der Molmassenverteilung von mindestens 2. Bevorzugt wird außerdem eine Erweichungstemperatur von kleiner als 20 °C. Als Molmasse ist in diesem Zusammenhang das Gewichtsmittel der Molmassenverteilung, wie sie beispielsweise über gelpermeationschromatographische Untersuchungen zugänglich ist, zu verstehen. Unter Erweichungstemperatur sei in diesem Zusammenhang die quasistatische Glasübergangstemperatur für amorphe Systeme und die Schmelztemperatur für semikristalline Systeme verstanden, die beispielsweise durch dynamisch differentialkalorimetrische Messungen bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Als Haftklebemassen können alle dem Fachmann bekannten Haftklebemassen, insbesondere Acrylat-, Naturkautschuk-, Synthesekautschuk- Silikon- oder Ethylenvinylacetat-basierende Systeme eingesetzt werden. Auch Kombinationen dieser Systeme sind erfindungsgemäß einsetzbar.

Sehr bevorzugt kommen acrylatbasierende Haftklebemassen zum Einsatz. Als Beispiele, aber ohne eine Einschränkung vornehmen zu wollen, seien als vorteilhaft im Sinne dieser Erfindung statistische Copolymere ausgehend von unfunktionalisierten $\alpha,\beta$-ungesättigter Estern und statistische Copolymere ausgehend von unfunktionalisierten Alkylvinylethern genannt. Bevorzugt werden $\alpha,\beta$-ungesättigte Carbonsäuren und ihre Derivate der allgemeinen Struktur

$$CH_2=C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z. B. 2-Ethylhexylacrylat und isoOctylacrylat sowie cyclische Monomere wie z. B. Cyclohexyl- oder Norbornylacrylat und Isobornylacrylat.

Ebenfalls einsetzbar als Monomere sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen oder Heterozyklen in $\alpha$-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol und $\alpha$-Methylstyrol.

Weitere erfindungsgemäß einsetzbare Monomere sind Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acrylsäure, Methacrylsäure, Itaconsäure und deren Ester, Crotonsäure und deren Ester, Maleinsäure und deren Ester, Fumarsäure und deren Ester, Maleinsäureanhydrid, Methacrylamid sowie N-alkylierte Derivate, Acrylamid sowie N-alkylierte Derivate, N-Methylolmethacrylamid, N-Methylolacrylamid, Vinylalkohol, 2-Hydroxyethylvinylether, 3-Hydroxypropylvinylether und 4-Hydroxybutylvinylether.

Bei Kautschuk oder Synthesekautschuk als Ausgangsmaterial für die Haftklebemasse sind weitere Variationsmöglichkeiten gegeben, z.B. aus der Gruppe der Naturkautschuke oder der Synthesekautschuke oder aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden können.

Weiterhin können Kautschuken zur Verbesserung der Verarbeitbarkeit vorzugsweise thermoplastische Elastomere mit einem Gewichtsanteil von 10 bis 50 Gew.-% bezogen auf den Gesamtelastomeranteil zugesetzt werden. Stellvertretend seien an dieser Stelle vor allem die besonders verträglichen Typen Polystyrol-Polyisopren-Polystyrol (SIS) und Polystyrol-Polybutadien-Polystyrol (SBS) genannt.

Auch silikonbasierende Haftklebemassen können vorzüglich im Sinne dieser Erfindung zum Einsatz kommen. Werden Haftklebemassen eingesetzt, die auf einem kondensationsvernetzenden Silikon basieren, dann bestehen sie insbesondere aus den nachfolgend genannten Komponenten:

  a) einem hydroxy-funktionalisierten Organopolysiloxan, welches aus mindestens einer Diorganosiloxaneinheit besteht,
  b) einem Organopolysiloxanharz mit der Formel: $(R^1_3SiO_{1/2})_x(SiO_{4/2})_1$, wobei $R^1$ eine substituierte oder unsubstituierte monovalente Kohlenwasserstoffgruppe, ein Wasserstoffatom oder eine Hydroxygruppe und x eine Zahl zwischen 0,5 und 1,2 ist,
  c) optional einem Stabilisator
  d) optional einem Initiator

Silikonhaftklebmassen dieser Art sind im Handel frei erhältlich. Beispielhaft seien an dieser Stelle genannt: DC 280, DC 282, Q2-7735, DC 7358, Q2-7406 von Dow Corning, PSA 750, PSA 518, PSA 910, PSA 6574 von Momentive Performance Materials, KRT 001, KRT 002, KRT 003 von ShinEtsu, PSA 45559 von Wacker Silicones sowie PSA 400, PSA 401 von BlueStar Silicones.

Alternativ kommen als Haftklebemasse solche zum Einsatz, die auf einem additionsvernetzten Silikon aus den nachfolgend genannten Komponenten basieren:

  a) einem Organopolysiloxan, welches aus mindestens einer Diorganosiloxaneinheit besteht und mindestens zwei Silizium-gebundene Alkenylgruppen in jedem Molekül trägt,
  b) einem Organopolysiloxanharz mit der Formel: $(R^1_3SiO_{1/2})_x(SiO_{4/2})_1$, wobei $R^1$ eine substituierte oder unsubstituierte monovalente Kohlenwasserstoffgruppe, ein Wasserstoffatom oder eine Hydroxygruppe und x eine Zahl zwischen 0,5 und 1,2 ist,
  c) einem Organopolysiloxan, welches im Mittel wenigstens zwei Silizium-gebundene Wasserstoffatome in jedem Molekül trägt, in einer Menge, dass 0.01 bis 10 Mol Silicium-gebundene Wasserstoffatome pro Mol der gesamten Alkenylgruppen der Komponenten a), b) und e) vorhanden sind und welches frei von olefinischen Doppelbindungen ist,
  d) einem metallorganischen Katalysator der 10. Gruppe des Periodensystems der Elemente
  e) optional einem Inhibitor

Silikonhaftklebmassen dieser Art sind im Handel frei erhältlich. Beispielhaft seien hier genannt: DC 7657, DC 2013 von Dow Corning, KR 3700, KR 3701 von ShinEtsu.

Zur Erzielung der erforderlichen klebtechnischen Eigenschaften werden den beschriebenen Silikonformulierungen so genannte MQ-Harze mit der Formel $(R^1_3SiO_{1/2})_x(SiO_{4/2})_1$ zugesetzt. Als M-Einheit werden darin die $(R^1_3SiO_{1/2})$-Einheiten bezeichnet, als Q-Einheit die $(SiO_{4/2})$-Einheiten. Jedes $R^1$ stellt unabhängig voneinander eine monovalente gesättigte Kohlenwasserstoffgruppe, eine monovalente ungesättigte Kohlenwasserstoffgruppe, eine monovalente halogenierte Kohlenwasserstoffgruppe, ein Wasserstoffatom oder eine Hydroxygruppe dar. Das Verhältnis von M-Einheiten zu Q-Einheiten (M:Q) liegt bevorzugt im Bereich von 0,5 bis 1,2.

Bei den MQ-Harzen handelt es sich vorteilhaft um solche mit einem gewichtsmittleren Molekulargewicht $M_W$ von 500 g/mol $\leq M_W \leq$ 100.000 g/mol, bevorzugt von 1.000 g/mol $\leq M_W \leq$ 25.000 g/mol, wobei sich die Angaben des mittleren Molekulargewichtes $M_W$ in dieser Schrift auf die Bestimmung per Gelpermeationschromatographie beziehen.

Es hat sich als günstig herausgestellt, wenn Klebemassen eingesetzt werden, bei denen das Anteilsverhältnis - bezogen auf Gewichtsprozent - von Polydiorganosiloxan zu MQ-Harz im Bereich von 20:80 bis 80:20, bevorzugt im Bereich von 30:70 bis zu 60:40, liegt.

MQ-Harze dieser Art sind im Handel frei erhältlich. Beispielhaft seien hier genannt: SL 160, SL 200, DC 2-7066 von Dow Corning, SR 545, SR 1000, 6031 SL von Momentive Performance Materials, CRA 17, CRA 42, MQ-Harz 803 von Wacker.

Neben der Harzmodifizierung können auch weitere Additive zu der silikonbasierenden Haftklebemasse hinzu gegeben werden. Als weitere Additive können genutzt werden:

- Prozessstabilisatoren, wie zum Beispiel Vinylsilane oder Alkinole als Inhibitoren für den Platinkatalysator
- Prozessbeschleuniger wie zum Beispiel Aminoorganyle
- Füllstoffe, wie zum Beispiel Siliziumdioxid, Glas (gemahlen oder in Form von Kugeln), Aluminiumoxide oder Zinkoxide, wobei die Füllstoffe insbesondere so klein gemahlen oder anders hergestellt sind, dass sie optisch nicht sichtbar sind
- gegebenenfalls weitere Polymere von bevorzugt elastomerer Natur; entsprechend nutzbare Elastomere beinhaltend unter anderem solche auf Basis reiner Kohlenwasserstoffe, zum Beispiel ungesättigte Polydiene, wie natürliches oder synthetisch erzeugtes Polyisopren oder Polybutadien; chemisch im wesentlichen gesättigte Elastomere, wie zum Beispiel gesättigte Ethylen-Propylen-Copolymere, $\alpha$-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen
- Plastifizierungsmittel, wie zum Beispiel Flüssigharze, Weichmacheröle oder niedermolekulare flüssige Polymere, wie zum Beispiel niedermolekulare Silikonöle mit Molmassen < 1500 g/mol (Zahlenmittel)

Die kondensationsvernetzenden Silikonhaftklebmassen werden zur Erzielung einer genügenden Kohäsion bevorzugt mit Peroxo-Initiatoren compoundiert. Besonders bevorzugt wird dafür Benzoylperoxid (BPO) verwendet. Die Peroxo-Initiatoren werden insbesondere in einer Menge von 0,2 bis 5 Gew.% bezogen auf den Festanteil der Silikonklebmasse eingesetzt. Um ein vernünftiges Maß zwischen Kohäsions- und Adhäsionsvermögen zu erzielen, wird insbesondere ein BPO-Gehalt von 0,5 bis 2 Gew.% gewählt. Bei der Lösungsmittelbeschichtung der Klebmasse wird zunächst für mindestens 2 Minuten eine Temperatur von 70-90°C gewählt, um die Lösungsmittel zu verdampfen. Anschließend wird für mindestens 2 Minuten eine Temperatur von 170-180°C eingestellt, um den Peroxidzerfall und so den Vernetzungsprozess zu initiieren.

Die Erzielung einer ausreichenden Kohäsion für additionsvernetzende Silikonklebmassen erfolgt insbesondere durch eine Platin-katalysierte Hydrosilylierungsreaktion zwischen den alkenylfunktionalisierten Organopolysiloxanen und den korrespondierenden SiHfunktionalisierten Organopolysiloxanen. Dabei wird bei der Beschichtung aus Lösung zunächst das Lösungsmittel bei einer Temperatur von 70-90°C und einer Verweilzeit von mindestens 2 Minuten entfernt. Anschließend wird die Temperatur auf 100-120°C erhöht und für bis zu 2 Minuten konstant gehalten.

Zusätzlich zu den klassischen Vernetzungsarten von Silikonhaftklebemassen mittels Peroxiden oder Übergangsmetallkatalyse können diese Klebmassen auch durch aktinische Strahlung, im speziellen Elektronenstrahlen, vernetzt werden. Dabei wird bei der Beschichtung aus Lösung zunächst das Lösungsmittel bei einer Temperatur von 70-90°C und einer Verweilzeit von mindestens 2 Minuten entfernt. Anschließend wird mit einer Elektronenstrahl-Dosis von mindestens 10 kGy vernetzt. Diese Art der Vernetzung ist besonders vorteilhaft, da sich so die Kohäsion nahezu stufenlos einstellen lässt, ohne dass die Eigenschaften Tack und Adhäsion negativ beeinflusst werden.

Als optional einsetzbare klebrigmachende Harze sind in Kombination mit den genannten und weiteren Klebmassegrundpolymeren oder -grundpolymergemischen ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und / oder Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. In vielen erfindungsgemäßen Verfahren ist der Zusatz von Klebharzen aber auf Grund ihrer die optische Qualität der Verklebungsschicht vermindernden Einflüsse nicht toleriert.

Als ebenfalls optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

Für Anwendungen, bei denen eine besonders hohe Reinheit und/oder optische Qualität gefordert wird, eignen sich hervorragend harzfreie acrylatbasierende oder silikonbasierende Haftklebemasseschichten.

Als Trägermaterialien, sofern diese in entsprechenden Varianten gewünscht sind, können in erfindungsgemäßen doppelseitig haftklebrigen Produkten prinzipiell alle dem Fachmann aus der Selbstklebeproduktbranche bekannte Typen und insbesondere solcher hoher optischer Qualität Einsatz finden.

Es können, ohne sich durch diese Aufzählung einschränken zu wollen, zur Herstellung der Trägerfolie alle filmbildenden und extrusionsfähigen Polymere eingesetzt werden. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung werden Polyvinylacetate eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von Polyethylenterephthalat (PET) eingesetzt. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™ oder der Firma DuPont Teijin mit dem Handelsnamen Melinex™. Eine weitere sehr bevorzugte Spezies der Polyester stellen die Polybutylenterephthalat-Folien dar. Auch Polyethylennaphthalat (PEN) ist geeignet. In einer weiteren bevorzugten Auslegung dieser Erfindung werden Polyvinylchloride (PVC) als Folie eingesetzt. Zur Steigerung der Temperaturstabilität können die in diesen Folien enthaltenen Polymerbestandteile unter Verwendung versteifender Comonomere hergestellt werden. Weiterhin können die Folien im Zuge des erfinderischen Prozesses strahlenvernetzt werden, um eine ebensolche Eigenschaftsverbesserung zu erhalten. Kommt PVC als Folienrohstoff zum Einsatz, kann es optional plastifizierende Komponenten enthalten (Weichmacher). In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren bevorzugten Auslegung dieser Erfindung werden Polymethacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur herab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der Trägerfolie eingesetzt werden. Als Beispiel sei Polysytrol (PS) genannt. Weiterhin können Polyethersulfon- und Polysulfon-Filme als Trägermaterialien eingesetzt werden. Diese sind z.B. von der Firma BASF unter dem Handelsnamen Ultrason™ E und Ultrason™ S zu beziehen. Ferner können auch besonders bevorzugt hochtransparente TPU-Folien eingesetzt werden. Diese sind z.B. kommerziell erhältlich von der Firma Elastogran GmbH. Es können auch hochtransparente Folien auf Basis von Polyvinylalkohol und Polyvinylbutyral verwendet werden.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Neben einschichtigen Folien können auch mehrschichtige Folien verwendet werden, die z.B. coextrudiert hergestellt werden. Hierfür können die zuvor genannten Polymermaterialien miteinander kombiniert werden.

Ferner können die Folien behandelt sein. So können z.B. Bedampfungen oder Besputterungen vorgenommen sein, beispielsweise mit Zinkoxid, oder es können Lacke oder Haftvermittler aufgetragen sein. Eine weitere mögliche Additivierung stellen UV-Schutzmittel dar, die als Additive in der Folie vorliegen können oder als Schutzschicht aufgebracht sein können.

Die Trägerfolie kann beispielsweise auch eine optische Beschichtung aufweisen. Als optische Beschichtung eignen sich insbesondere Beschichtungen, die die Reflexion verringern. Dies wird beispielsweise durch eine Absenkung der Brechungsindexdifferenz für den Übergang Luft / optische Beschichtung erreicht.

Zur Herstellung erfindungsgemäß bevorzugter Trennliner A und B bzw. eines doppelseitig trennenden Trennliners können prinzipiell ebenfalls alle filmbildenden und extrusionsfähigen Polymere eingesetzt werden, die bevorzugt einseitig oder beidseitig mit Trennsystemen ausgestattet sind. Beispiele sind in den Zusammenstellungen von Satas, Kinning und Jones, die an dieser Stelle zitiert seien, zu finden [D. Satas in "Handbook of Pressure Sensitive Adhesives Technology", D. Satas (ed.), 3. Aufl., 1999, Satas & Associates, Warwick, S. 632 - 651; D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535 - 571; D. Jones, Y. A. Peters in "Handbook of Pressure Sensitive Adhesives Technology", D. Satas (ed.), 3. Aufl., 1999, Satas & Associates, Warwick, S. 652 - 683].

Trennliner bestehen in einer bevorzugten Auslegung der Erfindung aus einer Trägerfolie, die ein- oder beidseitig mit einem Trennlack, der bevorzugt auf Silikon basiert, ausgestattet ist. In einer bevorzugten Auslegung dieser Erfindung werden als Trägermaterial für die Trennliner Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit. In einer besonders bevorzugten Ausführungsform dieser Erfindung werden Polyester auf Basis von Polyethylenterephthalat (PET) als Trägermaterial für die Trennliner eingesetzt. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™ oder der Firma DuPont Teijin mit dem Handelsnamen Melinex™.

Weiterhin kommen diverse Papiere, optional auch in Kombination mit einer stabilisierenden Extrusionsbeschichung, als Trägermaterial für Trennliner in Frage. Alle genannten Trennliner erhalten durch einen oder mehrere Beschichtungsgänge beispielsweise aber bevorzugt mit einem Silikon-basierenden Release, ihre antiadhäsiven Eigenschaften. Der Auftrag kann dabei ein- oder beidseitig erfolgen. Trennliner können zudem eine Fluoro-Silikonisierung als Trennmittel tragen. Dies ist insbesondere vorteilhaft zur Eindeckung von silikonbasierenden Haftklebemasseschichten. Neben Fluoro-Silikonsystem kommen bevorzugt auch Beschichtungen aus fluorierten Kohlenwasserstoffen auf Trennlinern in Betracht.

In einer sehr bevorzugten Auslegung der Erfindung sind die Trennlacke abgestuft, d. h. die Trennwerte unterscheiden sich auf der ersten und zweiten Trennschicht. Auf diesem Wege wird die Abrollbarkeit des doppelseitigen haftklebrigen Produkts oder haftklebrigen Zwischenprodukts gewährleistet. Das Verhältnis AZK1 : AZK2 beträgt bevorzugt zwischen 1 : 1,5 und 1 : 4, oder mehr oder weniger.

Alle dem Fachmann geläufigen Konzepte zur Einstellung der Trenneigenschaften der Trennschichten sind im Sinne dieser Erfindung prinzipiell einsetzbar. Zusammenstellungen von Steuermöglichkeiten stellen Satas, Kinning und Jones zusammen [D. Satas in "Handbook of Pressure Sensitive Adhesives Technology", D. Satas (ed.), 3. Aufl., 1999, Satas & Associates, Warwick, S. 632 - 651; D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535 - 571; D. Jones, Y. A. Peters in "Handbook of Pressure Sensitive Adhesives Technology", D. Satas (ed.), 3. Aufl., 1999, Satas & Associates, Warwick, S. 652 - 683].

Es ist zudem bekannt, dass die Oberflächenrauhigkeit von Trennsystemen über die effektive Kontaktfläche zu den haftklebrigen Oberflächen einen Einfluss auf die Trennkräfte hat. Über die Steuerung der Oberflächenrauhigkeit ist es möglich, die Abstufung des Trennverhaltens auf den beiden haftklebrigen Oberflächen einzustellen [US 4,454,266].

Die Trennkraft von Silikonsystemen kann darüberhinaus beeinflusst werden durch Corona-Behandlung oder Beflammung [US 3,632,386]. Weiterhin beeinflusst die Klebemasse über ihre Chemie, ihre Schichtdicke und ihren Modul das Trennverhalten. Die Trennschicht übt über ihre Chemie, die Schichtstärke, die Vernetzungsdichte, den Modul und die Flächenbelegung (vollflächig oder strukturiert) einen Einfluss auf die Trenneigenschaften aus. Das Trägermaterial der Trennliner beinflusst die Trenneigenschaften über die Rauhigkeit.

US 2008/311,333 beschreibt weitere Möglichkeiten, wie die Trennkraft von Trennsystemen beeinflusst werden kann. Dabei wird als Beispielanwendung ein Transferklebeband genannt, bei dem die beiden Oberflächen durch zwei Trennliner eingedeckt werden, die sich in ihrer Trennkraft deutlich unterscheiden. Der zuerst auszudeckende Liner weist eine "light" Trennkraft auf, der zweite Liner eine "heavy" Trennkraft.

Überraschenderweise wurde gefunden, dass im Sinne dieser Erfindung besonders vorteilhafte Produkte bereitgestellt werden können, wenn das Verhältnis aus Abzugskraft des zweiten Trennliners von der zweiten haftklebrigen Oberfläche speziell auf die Verklebungsfestigkeit für den Kontakt der ersten haftklebrigen Oberfläche auf dem Zielverklebungsuntergrund austariert ist und einen Mindestwert annimmt. Nur wenn dieses Verhältnis erreicht oder überschritten wird, ist ein sauberes Ablösen des zweiten Trennliners von der zweiten haftklebrigen Oberfläche möglich, ohne dass optische Beeinträchtigungen in der Verklebung auf dem Zielsubstrat auftreten.

Dieses neu gefundene Verhältnis aus der Klebkraft der über die erste haftklebrige Oberfläche auf dem Zielsubstrat erzeugten Verklebung einerseits und der Abzugskraft der zweiten Trennschicht von der zweiten haftklebrigen Oberfläche andererseits, KK(frisch) : AZK2, ist dann erfindungsgemäß und für die Verwendung des Produkts vorteilhaft, wenn es mindestens 13,5, bevorzugt mindestens 15,0, sehr bevorzugt mindestens 20,0 beträgt. Der Nutzen der Kenntnis dieser Werte liegt darin, dass ein Produktentwickler bei einem für die Verklebung eines vorausgewählten Klebmassesystems auf einem avisierten Zielsubstrat ein Trennlinersystem leichter und schneller auswählen kann, das für die Kombination aus Klebmasse und Verklebungsuntergrund besonders geeignet ist. Gehorcht eine Trennschicht, die als zweite Trennschicht eingesetzt werden soll, dem erfinderischen Verhältnis KK(frisch : AZK2 von mindestens 13,5, bevorzugt mindestens 15,0, sehr bevorzugt mindestens 20,0 dann lässt sich diese zweite Trennschicht derart von der zweiten haftklebrigen Oberfläche ablösen lässt, dass die Verklebung in ihrer optischen Qualität nicht beeinträchtig wird.

Eine Reihe von technischen Möglichkeiten steht dem Fachmann zur Verfügung, um eine erfindungsgemäße Einstellung des erfinderischen Verhältnisses KK(frisch) : AZK2 vorzunehmen. Üblicherweise sind zunächst der Klebuntergrund, ggf. einschließlich seiner Oberflächenenergie, und die vorgesehene haftklebrige Schicht bekannt, mit der er in Verbindung kommen soll. Über diese Kenntnis lassen sich insbesondere durch Probemessungen der Verklebungsfestigkeit Daten zur Klebkraft erzeugen. In Kombination mit den erfinderischen Wertebereichen des Verhältnisses aus der Klebkraft der über die erste haftklebrige Oberfläche auf dem Zielsubstrat erzeugten Verklebung einerseits und der Abzugskraft der zweiten Trennschicht von der zweiten haftklebrigen Oberfläche andererseits von mindestens 13,5, bevorzugt mindestens 15,0, sehr bevorzugt mindestens 20,0, lässt sich eine anwendungsgerechte Designvorgabe für die Abzugskraft der zweiten Trennschicht von der zweiten haftklebrigen Oberfläche berechnen. Die Menge der für die Auswahl für diese Anwendung geeigneten Trennliner lässt sich damit begrenzen, was eine Effizienzsteigerung in der Produktentwicklung zur Folge hat.

Dem Fachmann stehen zur Einstellung des erfinderischen Verhältnisses KK(frisch) : AZK2 alle aus dem Stand der Technik bekannten Methoden zur Einstellung der Trenneigenschaften (vor allem der Abzugskraft) von Trennlinern im Wechselspiel mit haftklebrigen Schichten zur Verfügung (siehe dazu auch [D. Satas in "Handbook of Pressure Sensitive Adhesives Technology", D. Satas (ed.), 3. Aufl., 1999, Satas & Associates, Warwick, S. 632 - 651; D. J. Kinning, H. M. Schneider in "Adhesion Science and Engineering - Band 2: Surfaces, Chemistry & Applications", M. Chaudhury, A. V. Pocius (Hrsg.), 2002, Elsevier, Amsterdam, S. 535 - 571; D. Jones, Y. A. Peters in "Handbook of Pressure Sensitive Adhesives Technology", D. Satas (ed.), 3. Aufl., 1999, Satas & Associates, Warwick, S. 652 - 683]). Dabei sind auch beliebige Kombinationen einzelner oder mehrerer Methoden möglich. Als Beispiele seien genannt, ohne sich durch dieses Aufzählung einschränken zu wollen:

- Wahl des Trennmediums im Hinblick auf insbesondere Zusammensetzung, Härtung und/oder Massenauftrag
- Einsatz physikalischer Vorbehandlungen der trennend wirkenden Oberfläche
- Anpassung der Trägerdicke des Trennliners
- Einsatz von controlled release agents
- Strukturierung der Trennschicht
- Modifikation der Rauhigkeit der trennend wirkenden Oberfläche
- Anpassung des Herstellkonzepts umfassend Direktbeschichtung der Haftklebemasse oder Zukaschierung.

Abzugskräfte, wie sie im Zusammenhang mit dieser Offenbarung genannt werden, sind bei einer Abzugsgeschwindigkeit von 300 mm/min zu verstehen. Es ist bekannt, dass üblicherweise und insbesondere bei silikonbasierenden Trennsystemen die Abzugskraft steigt, wenn bei höheren Abzugsgeschwindigkeiten gearbeitet wird. Auch für solche höheren Abzugsgeschwindigkeiten lassen sich erfinderische Verhältnisse finden, die dann unterhalb der für 300 mm/min gewonnenen Abzugskraft liegen. Der Fachmann kann auf Grund der vorliegenden Erfindung und durch Durchführung eigener Tests entsprechende Mindestwerte für solche Verhältnisse ermitteln, ohne den Rahmen dieser Erfindung zu verlassen.

*Produktdesigns*

Bei den doppelseitig haftklebrigen Produkten, die in dem erfindungsgemäßen Verfahren verwendet werden, handelt es sich um Transferklebebänder oder -folien.

Die erfindungsgemäß verwendeten doppelseitig haftklebrigen Produkte enthalten zumindest eine Haftklebeschicht.

Der Aufbau der doppelseitig haftklebrigen Produkte umfasst dabei eine erste und eine zweite Trennschicht sowie eine hierzwischen angeordnete Haftklebemassenschicht. Handelt es sich bei den Trennschichten um Trennschichten unterschiedlicher Trennliner, so können die verwendeten Liner eine unterschiedliche Form und/oder Größe aufweisen. Zum Beispiel kann ein Trennliner in seinen Abmessungen die Haftklebemassenschicht und den anderen Trennliner überragen. Ebenfalls vorstellbar ist ein Produktaufbau, in dem die Trennliner die gleiche Form und/oder Größe aufweisen und die Haftklebemassenschicht in Form und/oder Größe überragen. In einer Ausführungsform kann das doppelseitig haftklebrige Produkt in Form entsprechend einer Etikettenbahn ausgebildet sein. So kann z.B. ein erster Trennliner bahnförmig ausgebildet sein, während die Haftklebemassenschicht in Form sich wiederholender z.B. durch Stanzen vereinzelter (ähnlich etikettenförmiger) Abschnitte hierauf aufgebracht ist. Der zweite Trennliner kann dann ebenfalls lediglich auf im Bereich der Haftklebemasse wiederkehrende Abschnitte beschränkt sein oder eine Form und/oder Größe aufweisen, die im Wesentlichen der Form und/oder Größe des ersten Trennliners entspricht. In letzterem Fall sind jedoch in einer vorteilhaften Ausführungsform im Bereich der Haftklebemasseflächen Stanzungen in dem zweiten Trennliner vorgesehen.

Die Masseaufträge der einen oder mehreren Haftklebeschichten kann bzw. können unabhängig voneinander gewählt werden. Sie liegen zwischen 1 g/m$^2$ und 1000 g/m$^2$, insbesondere zwischen 10 g/m$^2$ und 500 g/m$^2$, sehr

bevorzugt zwischen 20 g/m$^2$ und 250 g/m$^2$.

Kommen mehr als eine Haftklebeschicht zum Einsatz, können die Schichten gleicher oder unterschiedlicher Art im Hinblick auf Chemie, Formulierung und/oder Vernetzungszustand sein. Auch trägerfreie Varianten können zwei oder mehr Haftklebeschichten enthalten. Als ein Beispiel für eine Kombination für verschiedene Haftklebemassearten, die in einem doppelseitig haftklebrigen Produkt kombiniert sein können, sei ein System bestehend aus einer acrylatbasierenden und einer silikonbasierenden Haftklebeschicht genannt.

Kommen zwei Trennliner bei der Eindeckung zum Einsatz, so kann ihre Dicke gleich oder verschieden sein. Bevorzugt wird der Einsatz von zwei Trennlinern verschiedener Dicke. Sehr bevorzugt wird bei der Herstellung der doppelseitig haftklebrigen Produkte die Haftklebmasseschicht, die als erstes auf dem Zielsubstrat verklebt werden soll, mit dem dünneren Trennliner nach der Beschichtung und Trocknung eingedeckt. Der dickere Trennliner wird in diesem Szenario bevorzugt direkt mit der Klebmasse für die als zweites zu verklebende Haftklebemasseschicht beschichtet.

Die Trennschichten in Trennliner A und B, bzw. der Oberseite und Unterseite in doppelseitigen Trennlinern können unabhängig voneinander im Hinblick auf Rohstoffklasse, Vernetzungsart, Vernetzungsgrad, Formulierung, physikalischer Vorbehandlung, chemischer Vorbehandlung und/oder Schichtauftrag sowie im Hinblick auf eine etwaige Strukturierung ausgewählt werden.

Doppelseitig mit Trennschichten ausgerüstete Trennliner weisen bevorzugt eine Dicke von mindestens 20 $\mu$m auf und von weniger als 150 $\mu$m. Für einseitig mit Trennschicht ausgestattete Trennliner wird derselbe Wertebereich bevorzugt.

Kommen Trennlinerkombinationen zum Einsatz, dann können die Dicken von Trennliner A und Trennliner B gleich oder verschieden sein. Geeignete Trennlinerdicken liegen wiederum zwischen 20 $\mu$m und 150 $\mu$m. Besonders vorteilhafte Trennlinerdickenkombinationen bestehen aus Trennlinern mit Dicken im Bereich von jeweils 30 $\mu$m bis 80 $\mu$m. Besonders vorteilhafte Trennlinerdickenkombinationen sind 36 $\mu$m (Dicke von Trennliner A) und 50 $\mu$m (Dicke von Trennliner B) bzw. umgekehrt sowie 50 $\mu$m und 75 $\mu$m bzw. umgekehrt.

*Herstellung*

In bevorzugten Herstellverfahren wird für Transferklebeprodukte eine erste Trennlinerbahn mit einer Haftklebemasse beschichtet. Typischerweise geschieht dies mit einer lösungsmittelhaltigen Formulierung, die anschließend getrocknet wird. Es ist vorteilhaft, die Haftklebemasse so auszuwählen, dass ihre Vernetzung zumindest teilweise während des Trocknungsprozesses abläuft. Es kann vorteilhaft sein, dass der Vernetzungsprozess zum Ende des Trocknungsprozesses abgeschlossen ist. Vor dem Aufwickeln der beschichteten Bahn kann der Oberseite eine zweite Trennlinerbahn zukaschiert werden. Dies geschieht vor allem, wenn als erster Trennliner ein einseitig trennend ausgestattes System eingesetzt wird. Ballenware kann im Anschluss nach Wunsch konfektioniert werden, so beispielsweise in Mutterrollen oder Streifen geschnitten werden oder in Folienblätter geschnitten, gestanzt oder abgelängt werden. Dem Fachmann sind weitere Verfahren zur Herstellung von Transferklebebändern und -folien bekannt, die ebenfalls für erfindungsgemäße Produkte eingesetzt werden können.

*Verwendung*

Beschreibungsgemäß doppelseitig haftklebrige Produkte eignen sich zum verbindenden Kleben von zwei Objekten. Besonders vorteilhaft sind sie einsetzbar zur Verklebung auf niederenergetischen Oberflächen wie insbesondere polyolefinisch ausgestattete Oberflächen, polyolefinische Bauteile sowie unpolare Lackierungen und Beschichtungen wie einige Pulverlacke und UV-Lacke, die beispielsweise Dekor- und/oder Schutzfunktionen übernehmen. Sehr bevorzugt ist die Verwendung in Verklebungsaufgaben, bei denen es auf besonders hohe optische Qualität der Verklebung ankommt. Dazu zählen Verklebungen optischer Bauteile und/oder Folien aller Art wie zum Beispiel in Displays aber auch in großflächigen Glasverklebungen. Insofern betrifft die vorliegende Erfindung ebenfalls die Verwendung der genannten Produkte zur Verklebung transparenter Substrate.

*Testmethoden*

<u>Testmethode A - Abzugskraft:</u> Die Abzugskraft wurde wie folgt bestimmt: Es wurde in Anlehnung an FINAT FTM 3 vorgegangen. Zur Bestimmung der Abzugskraft wird ein Muster des Trennliners auf etwa 20 cm Länge und 50 mm Breite zurechtgeschnitten. Die zu untersuchende Trennschicht wird mit einem Streifen des die Haftklebemasse enthaltenden Produkts in Kontakt gebracht. Der Verbund wird in einer Zugprüfmaschine eingespannt. Bei einer Geschwindigkeit von 300 mm/min und einem Abzugswinkel von 180° wird die Kraft gemessen, die zum Trennen des Verbunds erforderlich ist. Die Präparation und Durchführung der Messung erfolgt bei 23 °C und bei 50 % rel. Feuchtigkeit. Die Ergebnisse werden in Einheiten cN/cm angegeben.

<u>Testmethode B - Klebkraft:</u> Es wurde in Anlehnung an Afera ATM 5001 vorgegangen (innerhalb ATM 5001 Methode C für trägerhaltige doppelseitige Klebebänder oder Methode E für Transferklebebänder). Ein Streifen in 20 mm Breite und etwa 20 cm Länge eines doppelseitig haftklebrigen Produkts wird auf eine Testplatte aufgebracht und angerollt (durch fünfmaliges Hin- und Herrollen eines walzenförmigen, 4 kg schweren Gewichtes mit einer Rollgeschwindigkeit von 10 m/min), wobei das eine Ende des doppelseitig haftklebrigen Produkts frei bleibt. Im Falle eines Transferklebebandes wird das Transferklebeband rückseitig mit einem Polyester-Hilfsträger zur Verstärkung ausgestattet. Die Testplatte wird in eine Klemmbacke einer Zugprüfmaschine (z.B. BZ2.5 der Firma Zwick / Roell) eingespannt, das freie Ende des doppelseitig haftklebrigen Produktes wird in die zweite Klemmbacke der Zugprüfmaschine eingespannt. Unter einem Winkel von 180° wird bei einer Geschwindigkeit von 300 mm/min zur Bestimmung der Klebkraft der Frischverklebung, KK(frisch), der Klebestreifen vom Untergrund unmittelbar nach der Präparation, d.h. innerhalb von fünf Minuten nach Aufbringen und Anrollen auf die Testplatte (die Frischverklebung widerspiegelnd) abgelöst und dabei die erforderliche Kraft registriert. Die Präparation und Durchführung der Messung erfolgt bei 23 °C und bei 50 % rel. Feuchtigkeit. Die Ergebnisse werden in Einheiten cN/cm angegeben

Testmethode C - Oberflächenenergie: Die Oberflächenenergie wurde mit Hilfe von Kontaktwinkelmessungen ermittelt. Die Bestimmung des Kontaktwinkels wird zur Charakterisierung der Benetzungseigenschaften zwischen festen und flüssigen Körpern eingesetzt. Bei der Bestimmung des Kontaktwinkels wird ein Flüssigkeitstropfen mit einer Spritze auf der jeweiligen Oberfläche abgesetzt. Die Bestimmung der Oberflächenenergie erfolgt an einem Krüss Kontaktwinkelmesssystem G2. Die Messung erfolgte mit einer Methode nach Young Laplace mit jeweils 4 Tropfen der Testflüssigkeiten. Bei dieser Methode wurden als Testflüssigkeiten zweifach destilliertes Wasser sowie Dijodmethan verwendet. Von jedem Tropfen wurden 10 Messwerte bestimmt. Die Auswertung der Messung erfolgte nach Owens-Wendt-Rabel & Kaeble.

*Beispiel 1*

Ein Polyacrylat mit 7 % Acrylsäure und einem k-Wert nach Fikentscher von 55 wurde mit 0,6 % Aluminiumchelat vernetzt und mittels Rakelverfahren als Lösung in Aceton/Benzin auf einen Trennliner A (erste Trennschicht) beschichtet, getrocknet und mit Trennliner B (zweite Trennschicht) eingedeckt. Der Massenauftrag der Haftklebeschicht betrug nach Trocknung 50 g/m$^2$. Das Design entsprach dem eines Transferklebebands. Als Trennliner A kam ein silikonisiertes 50 $\mu$m PET-Folien basierendes System zum Einsatz. Als Trennliner B wurde ein silkonisiertes 36 $\mu$m PET-Folien basierendes System ausgewählt. Die Abzugskraft von Trennliner A und somit von Trennschicht 1, AZK1, betrug 2,5 cN/cm. Die Abzugskraft von Trennliner B und somit von Trennschicht 2, AZK2, betrug 4,5 cN/cm. Es wurde eine Testverklebung auf einer Polypropylenplatte, deren Oberfläche eine Oberflächenenergie (bestimmt nach Testmethode C) von 30 mN/m aufweist, vorgenommen. Diese ergab eine Klebkraft im Frischzustand, KK(frisch), von 70 cN/cm. Das erfinderische Verhältnis, KK(frisch) : AZK2, betrug damit 15,6. Es wurde der Ablöseprozess des zweiten Trennliners, d.h. vorliegend der zweiten Trennschicht untersucht, nachdem der Teststreifen frisch auf die Polypropylenplatte aufgeklebt worden war. Der Trennliner ließ sich einwandfrei ablösen. Die Verklebung blieb unbeeinträchtigt. Dieses Produkt erfüllt damit die gestellten Anforderungen.

*Beispiel 2*

Ein Polyacrylat mit 10 % Acrylsäure und einem k-Wert nach Fikentscher von 82 wurde mit 0,4 % Aluminiumchelat vernetzt und mittels Rakelverfahren als Lösung in Aceton/Benzin auf einen doppelseitigen Trennliner beschichtet, getrocknet und aufgewickelt. Der Massenauftrag der Haftklebeschicht betrug nach Trocknung 50 g/m$^2$. Das Design entsprach dem einer Transferklebebandrolle. Die Abzugskraft von Trennseite 2 und somit von der zweiten Trennschicht, AZK2, betrug 7 cN/cm. Es wurde eine Testverklebung auf einer Polypropylenplatte, deren Oberfläche eine Oberflächenenergie (bestimmt nach Testmethode C) von 30 mN/m aufweist, vorgenommen. Diese ergab eine Klebkraft im Frischzustand, KK(frisch), von 100 cN/cm. Das erfinderische Verhältnis, KK(frisch) : AZK2, betrug damit 14,3. Es wurde der Ablöseprozess der zweiten Trennseite, d.h. der zweiten Trennschicht untersucht, nachdem der Teststreifen frisch auf die Polypropylenplatte aufgeklebt worden war. Der Trennliner ließ sich einwandfrei ablösen. Die Verklebung blieb unbeeinträchtigt. Dieses Produkt erfüllt damit die gestellten Anforderungen.

*Vergleichsbeispiel*

Ein Polyacrylat mit 7 % Acrylsäure und einem k-Wert nach Fikentscher von 55 wurde mit 0,6 % Aluminiumchelat vernetzt und mittels Rakelverfahren als Lösung in Aceton/Benzin auf einen Trennliner A beschichtet, getrocknet und mit Trennliner B eingedeckt. Der Massenauftrag der Haftklebeschicht betrug nach Trocknung 50 g/m$^2$. Das Design entsprach dem eines Transferklebebands. Als Trennliner A kam ein silikonisiertes 50 $\mu$m PET-Folien basierendes System zum Einsatz. Als Trennliner B wurde ein silkonisiertes 36 $\mu$m PET-Folien basierendes System ausgewählt. Die Abzugskraft von Trennliner 1, AZK1, betrug 4 cN/cm. Die Abzugskraft von Trennliner 2, AZK2, betrug 7 cN/cm. Es wurde eine Testverklebung auf einer transparenten Polypropylenplatte, deren Oberfläche eine Oberflächenenergie (bestimmt nach Testmethode C) von 30 mN/m aufweist, vorgenommen. Diese ergab eine Klebkraft im Frischzustand, KK(frisch), von 70 cN/cm. Das Verhältnis, KK(frisch) : AZK2, betrug damit 10. Es wurde der Ablöseprozess des zweiten Trennliners untersucht, nachdem der Teststreifen frisch auf die Polypropylenplatte aufgeklebt worden war. Der Trennliner ließ sich nicht einwandfrei ablösen. An einigen Stellen löste sich die Klebmassenschicht punktuell von der Substratoberfläche und hinterließ erkennbare Defekte. Dieses Produkt erfüllt damit die gestellten Anforderungen nicht.

**Patentansprüche**

1. Verfahren zur Herstellung einer Verklebung zweier Substrate, von denen zumindest eines transparent ist und von denen zumindest eines eine Oberfläche mit einer Oberflächenenergie (gemessen nach Testmethode C) von höchstens 40 mN/m aufweist,
umfassend die Verwendung eines doppelseitig haftklebrigen Produktes mit einer ersten und einer zweiten haftklebrigen Oberfläche,
wobei das doppelseitig haftklebrige Produkt ein Transferklebeband ist,
wobei die erste haftklebrige Oberfläche mit einer ersten Trennschicht eingedeckt ist und die zweite haftklebrige Oberfläche mit einer zweiten Trennschicht eingedeckt ist,
wobei die Abzugskraft der ersten Trennschicht von der ersten haftklebrigen Oberfläche, $AZK_1$, geringer ist als die Abzugskraft der zweiten Trennschicht von der zweiten haftklebrigen Oberfläche, $AZK_2$,
und wobei das Verhältnis der Klebkraft der Frischverklebung ($KK_{frisch}$, gemessen nach Testmethode B) der ersten haftklebrigen Oberfläche auf einer Oberfläche mit einer Oberflächenenergie (gemessen nach Testmethode C) von höchstens 40 mN/m zu der Abzugskraft (gemessen nach Testmethode A) der zweiten Trennschicht von der zweiten haftklebrigen Oberfläche, $KK_{frisch}$: $AZK_2$, mindestens 13,5 beträgt,
umfassend die folgenden Schritte:

(a) das Lösen der ersten Trennschicht von der ersten haftklebrigen Oberfläche sowie das Inkontaktbringen der ersten haftklebrigen Oberfläche mit der Oberfläche des ersten der zwei zu verklebenden Substrate mit einer Oberflächenenergie (gemessen nach Testmethode C) von höchstens 40 mN/m,
(b) das Lösen der zweiten Trennschicht von der zweiten haftklebrigen Oberfläche und das Inkontaktbringen der zweiten haftklebrigen Oberfläche mit der Oberfläche des zweiten der zwei zu verklebenden Substrate, so dass die Klebkraft der zweiten haftklebrigen Oberfläche auf der Oberfläche des zweiten der zwei zu verklebenden Substrate weniger als 35 cN/cm beträgt (gemessen nach Testmethode B).

2. Verfahren gemäß einem der vorangehenden Ansprüche, worin das doppelseitig haftklebrige Produkt zu einer archimedischen Spirale aufgewickelt ist.

3. Verfahren gemäß einem der vorangehenden Ansprüche, worin die erste und die zweite haftklebrige Oberfläche des doppelseitig haftklebrigen Produkts mit jeweils einem Trennliner eingedeckt sind.

4. Verfahren gemäß einem der vorangehenden Ansprüche, worin beide Substrate transparent sind.

**Claims**

1. Method for producing an adhesive bond of two substrates, at least one of which is transparent and at least one of which has a surface with a surface energy (measured by test method C) of not more than 40 mN/m,
comprising the use of a double-sidedly pressure-sensitively adhesive product having first and second pressure-sensitively adhesive surfaces,
the double-sidedly pressure-sensitively adhesive product being an adhesive transfer tape,
the first pressure-sensitive adhesive surface being lined with a first release layer, and the second pressure-sensitively adhesive surface being lined with a second release layer,
the peel force of the first release layer from the first pressure-sensitively adhesive surface, $AZK_1$, being lower than the peel force of the second release layer from the second pressure-sensitively adhesive surface, $AZK_2$,
and the ratio of the bond strength of the fresh bond ($KK_{fresh}$, measured by test method B) of the first pressure-sensitively adhesive surface to a surface having a surface energy (measured by test method C) of not more than 40 mN/m to the peel force (measured by test method A) of the second release layer from the second pressure-sensitively adhesive surface, $KK_{fresh}$:$AZK_2$, being at least 13.5,

comprising the following steps:

(a) parting the first release layer from the first pressure-sensitively adhesive surface, and contacting the first pressure-sensitively adhesive surface with the surface of the first of the two substrates to be adhesively bonded having a surface energy (measured by test method C) of not more than 40 mN/m,
(b) parting the second release layer from the second pressure-sensitively adhesive surface, and contacting the second pressure-sensitively adhesive surface with the surface of the second of the two substrates to be adhesively bonded so that the bond strength of the second pressure-sensitively adhesive surface to the surface of the second of the two substrates to be adhesively bonded is less than 35 cN/cm (measured by test method B).

2. Method according to any of the preceding claims, wherein the double-sidedly pressure-sensitively adhesive product is wound up into an Archimedean spiral.

3. Method according to either of the preceding claims, wherein the first and second pressure-sensitively adhesive surfaces of the double-sidedly pressure-sensitively adhesive product are each lined with a release liner.

4. Method according to any of the preceding claims, wherein both substrates are transparent.

## Revendications

1. Procédé pour la réalisation d'un collage de deux substrats parmi lesquels au moins un est transparent et parmi lesquels au moins un présente une surface dotée d'une énergie superficielle (mesurée selon le procédé de test C) d'au plus 40 mN/m, comprenant l'utilisation d'un produit autoadhésif double face présentant une première et une deuxième surface autoadhésive, le produit autoadhésif double face étant un ruban adhésif de transfert, la première surface autoadhésive étant recouverte par une première couche de séparation et la deuxième surface autoadhésive étant recouverte par une deuxième couche de séparation, la force d'arrachement de la première couche de séparation de la première surface autoadhésive, $FArr_1$, étant inférieure à la force d'arrachement de la deuxième couche de séparation de la deuxième surface autoadhésive, $FArr_2$, et le rapport de l'adhésivité du collage frais ($ADH_{frais}$, mesurée selon le procédé de test B) de la première surface autoadhésive sur une surface dotée d'une énergie superficielle (mesurée selon le procédé de test C) d'au plus 40 mN/m à la force d'arrachement (mesurée selon le procédé de test A) de la deuxième couche de séparation de la deuxième surface autoadhésive, $ADH_{frais}:FArr_2$, valant au moins 13,5, comprenant les étapes suivantes :

(a) détachement de la première couche de séparation de la première surface autoadhésive ainsi que mise en contact de la première surface autoadhésive avec la surface du premier des deux substrats à coller dotée d'une énergie superficielle (mesurée selon le procédé de test C) d'au plus 40 mN/m,
(b) détachement de la deuxième couche de séparation de la deuxième surface autoadhésive et mise en contact de la deuxième surface autoadhésive avec la surface du deuxième des deux substrats à coller de telle sorte que l'adhésivité de la deuxième surface autoadhésive sur la surface du deuxième des deux substrats à coller est inférieure à 35 cN/cm (mesurée selon le procédé de test B).

2. Procédé selon l'une quelconque des revendications précédentes, dans lequel le produit autoadhésif double face est enroulé en une spirale d'Archimède.

3. Procédé selon l'une quelconque des revendications précédentes, dans lequel la première et la deuxième surface autoadhésive du produit autoadhésif double face sont à chaque fois recouvertes d'une pellicule antiadhésive.

4. Procédé selon l'une quelconque des revendications précédentes, dans lequel les deux substrats sont transparents.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4728571 A
- EP 108208 A
- US 2008176086 A
- US 4181752 A
- US 5281455 A
- DE 4319023
- US 4454266 A
- US 3632386 A
- US 2008311333 A

**In der Beschreibung aufgeführte Nicht-Patentliteratur**

- **D. SATAS.** Handbook of Pressure Sensitive Adhesives Technology. Satas & Associates, 1999, 632-651
- **D. J. KINNING ; H. M. SCHNEIDER.** Adhesion Science and Engineering - Band 2: Surfaces, Chemistry & Applications. Elsevier, 2002, vol. 2, 535
- **D. J. KINNING ; H. M. SCHNEIDER.** Adhesion Science and Engineering - Band 2: Surfaces, Chemistry & Applications. Elsevier, 2002, vol. 2, 535-571
- **D. JONES ; Y. A. PETERS.** Handbook of Pressure Sensitive Adhesives Technology. Satas & Associates, 1999, 652-683